# EUROPEAN PATENT APPLICATION

(11) **EP 1 464 656 A1**
(43) Date of publication of application: **06.10.2004**
(21) Application number: 03007782.0
(22) Date of filing: 04.04.2003
(51) Int. Cl.: C08F 2/26, C09J 133/06

(54) **Emulsifier composition**

(71) Applicant: UCB S.A., 1070 Bruxelles (BE)
(72) Inventor: Van Es, Steven, 4000 Liège (BE); Dupont, Olivier, 1450 Chastre (BE)
(74) Representative: Destryker, Elise Martine

(57) **Abstract**

The invention relates to an emulsifier mixture comprising of at least one emulsifier of formula (I) 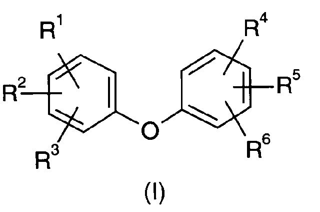 wherein one or two of R¹ to R⁶ groups are SO₃M, one or two of R¹ to R⁶ groups are a C1-18 alkyl group; and of at least one emulsifier chosen from linear or branched alkylethersulfates, and its use in aqueous polymer dispersions and emulsion polymerisations.

## Description

The invention relates to an emulsifier mixture, in particular an emulsifier mixture useful in aqueous polymer dispersions and in emulsion polymerisation, and especially suitable for aqueous polymer dispersions developed for pressure sensitive adhesive applications.

Pressure sensitive adhesives (PSA) form a permanently adhesive film, which is capable of adhering to various surfaces upon slight pressure at ambient temperature. Pressure sensitive adhesives serve for the manufacture of self-adhesive products, such as labels, tapes or films. Such products are easy to handle and allow fast processing. In contrast to other adhesives, no curing or solvent evaporation is required.
The quality of a self-adhesive products (i.e. tapes, or labels) is usually dependent on the adjustment of the internal strength within the PSA material (cohesion) and the external affinity to the substrate (adhesion). Particularly for pressure sensitive adhesives which are devoted for the production of self-adhesive films, tapes or labels, a high degree of cohesion, i.e. shear strength, is required, as under the conditions of further processing of these products (cutting, stamping, etc.) the adhesive film should firmly remain on the substrate. At the same time, the adhesion, i.e. the peel strength and loop tack of the product should meet the requirements for the intended application. Simultaneously, adhesion and cohesion of a pressure sensitive adhesive are difficult to adjust.

Pressure sensitive adhesives which have been reported to be suitable for the production of labels and tapes are disclosed e.g. in EP 0952199. The pressure sensitive adhesives are prepared from aqueous polymer dispersions comprising polymers and emulsifiers, such as an aromatic emulsifier. EP 0952161 discloses an emulsifier mixture comprising an aromatic emulsifier and an alkylethersulfate emulsifier, which seems suitable for the manufacture of adhesives. The aqueous polymer dispersions disclosed in these documents seem to be suitable for the preparation of pressure sensitive adhesives for tapes.

Besides good adhesion and good cohesion there are further properties of pressure sensitive adhesives which may be desired, especially when the adhesives are used with transparent facestock or substrate. It is known e.g. that many pressure sensitive adhesives with transparent facestock or substrate (especially those obtained from aqueous dispersions) show an effect, which is called "water whitening" or "blush", when subjected to water or high humidity. As this effect impairs the properties, i.e. the appearance of the subject to which the pressure sensitive adhesive is applied, water whitening is to be avoided for many applications. Furthermore, when used with transparent facestock or substrate, the pressure sensitive adhesives must form a film that is almost defect-free. The appearance of craters or holes in the film upon coating and drying must be avoided. In addition, aqueous polymer dispersion used for the preparation of pressure sensitive adhesives must present rheological properties adapted to the coating systems used to produce industrially tape and label castings. In the actual state of the coating technology, aqueous polymer dispersions should have a rheology with limited shear-thinning. When PSA formulations are applied with high-speed coating systems, like, for example, reverse gravure or the more innovative curtain coating, a rheology close to Newtownian behavior is a must. In addition, such rheology is favorable, after the aqueous dispersion is coated, to have a good surface levelling of the recently applied wet film towards a uniform flat dry film. In reverse gravure coating, a bad surface levelling is revealed by presence of lines (i.e. from the gravure design) in the dry film. More details about these issues can be found in 'Liquid film coating', 1997 Editor S.F. Kistler & P.M. Schweizer. Chapman & Hall, London.

The aqueous polymer dispersions must also be free of coagulum to ensure easy handling of the product, especially at industrial scale as well as to avoid additional cause of defects in the coated films.

The aqueous polymer dispersions known from the prior art do not have all these properties and therefore are not well suited to be used as pressure sensitive adhesives with transparent facestock or substrate.

It is an object of the invention to provide advantageous aqueous polymer dispersions, which are suitable as adhesives, especially with transparent facestock or substrate.

It has been surprisingly found that this underlying technical problem is solved by the subject matter of the present invention.

The present invention therefore relates to an emulsifier mixture comprising
(a) from 10 to 90 % by weight of the total weight of emulsifiers present in the mixture, of at least one emulsifier of formula (I) 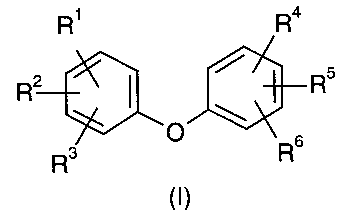 wherein one or two of R¹ to R⁶ groups are SO₃M, one or two of R¹ to R⁶ groups are a C1-18 alkyl group, and the remainder of R¹ to R⁶ groups are hydrogen and M represents a cation; and
(b) from 10 to 90 % by weight of the total weight of emulsifiers present in the mixture, of at least one emulsifier chosen from linear or branched alkylethersulfates responding to formula (II) and (III) 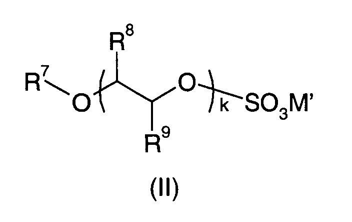 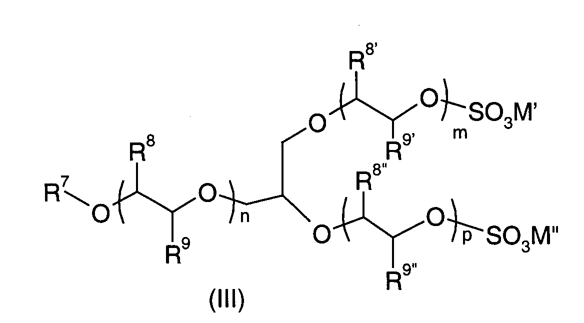
wherein R⁷ represents a C1-18 alkyl group, each of R⁸, R^{8'}, R^{8"}, R⁹, R^{9'} and R^{9"}, independently, represents hydrogen or a C1-6 alkyl group, M' and M", independently represent a cation, k is an integer from 6 to 20, and n, m and p, each independently, is an integer from 1 to 18 with the proviso that (n + m + p) is an integer from 6 to 20.

The term "alkyl", as used herein, is defined as including saturated, monovalent hydrocarbon radicals having straight or branched moieties or combinations thereof.

Emulsifiers of formula (I) are known in the prior art. They have for example been described in EP 0952199. In the emulsifier mixture according to the present invention, emulsifiers of formula (I) in which M represents a cation chosen from ammonium, hydrogen and alkali metals, especially sodium or potassium, are preferred. In the emulsifier mixture, emulsifiers of formula (I) wherein the alkyl group(s) comprises from 8 to 16 carbon atoms are preferred. In the emulsifier mixture according to the invention, it is preferred to use from 15 to 80 % by weight of at least one emulsifier of formula (I).

In the present invention, mixtures of two or more compounds responding to formula (I) can be used. In a particular embodiment of the invention, an emulsifier mixture comprising from 10 to 70, more preferably from 15 to 60 and most preferably from 20 to 50, % by weight of a emulsifier of formula (I) wherein only one of R¹ to R⁶ is a SO₃M group and only one of R¹ to R⁶ is a C1-18 alkyl group and from 0 to 60, more preferably from 0 to 30 and most preferably from 0 to 25, % by weight of at least one emulsifier wherein two of R¹ to R⁶ are SO₃M groups and/or C1-18 alkyl groups, is used.

Products comprising emulsifiers of formula (I) are commercially available, they are for example sold under the tradenames of DOWFAX®2A1, RHODACAL®DSB, UFAPOL®APS2, UFAPOL®DMA PS2.

Emulsifiers of formula (II) and (III) are known in the prior art. In the emulsifier mixture according to the present invention, emulsifiers of formula (II) and (III) in which M' and M", each independently, represent a cation chosen from ammonium, hydrogen and alkali metals, such as sodium or potassium, are preferred. More preferred were sodium and ammonium, especially ammonium. Emulsifiers of formula (II) and (III) wherein R⁷ is a C8-14 alkyl are especially preferred. Emulsifiers wherein R⁷ is a branched alkyl are preferred. Emulsifiers of formula (II) and (III) wherein at least one of R⁸ and R⁹, respectively at least one of R^{8'} and R^{9'}, at least one of R^{8"} and R^{9"}, is hydrogen are preferred. Emulsifiers of formula (II) and (III) wherein one of R⁸ and R⁹, respectively one of R^{8'} and R^{9'}, one of R^{8"} and R^{9"}, is a branched alkyl and the other being hydrogen, are preferred. Emulsifiers of formula (II) wherein k is an integer from 7 to 10 are especially preferred. Emulsifiers of formula (III) wherein (n + m + p) is an integer from 7 to 10 are especially preferred.

Products comprising emulsifiers of formula (II) and (III) are commercially available, they are for example sold under the tradenames of DISPONIL®FES993IS, RHODAPEX®AB20, RHODAPEX®L12.

In the emulsifier mixture according to the invention, it is preferred to use from 20 to 85 % by weight of at least one emulsifier of formula (II) or (III).

In a preferred embodiment of the invention, the emulsifier mixture comprises, in addition, from 5 to 60 %, more preferably from 10 to 50 %, by weight of the total weight of emulsifiers present in the mixture, of at least one emulsifier of formula (IV) 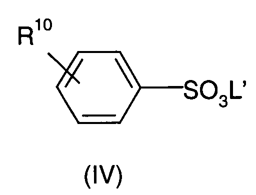 wherein R¹⁰ represents a C1-18 alkyl group and L' represents a cation.

Emulsifiers of formula (IV) wherein R¹⁰ represents a C8-14 alkyl group are preferred. Emulsifiers of formula (IV) wherein L' represents a cation chosen from ammonium, hydrogen and alkali metals, especially sodium or potassium, are preferred. Especially preferred is sodium. Particularly preferred is sodium dodecylbenzenesulfonate. Products comprising emulsifiers of formula (IV) are commercially available, they are for example sold under the tradename of RHODACAL®DS4.

Particularly preferred emulsifier mixtures according to the invention comprising, per weight of emulsifiers present in the mixture, from 15 to 60 %, more preferably from 15 to 50 %, by weight of at least one emulsifier of formula (I), from 30 to 60 %, more preferably from 40 to 60 %, by weight of at least one emulsifier of formula (II) or (III) and from 10 to 45 % by weight of at least one emulsifier of formula (IV).

The emulsifier mixture according to the invention is particularly useful in aqueous polymer dispersions, especially for those used for the manufacture of pressure sensitive adhesives.

The present invention therefore also relates to aqueous polymer dispersion comprising an emulsifier mixture such as described here above.

The emulsifier mixture is particularly useful in aqueous polymer dispersions comprising a polymer P comprising from 5 to 92.5 wt.-% of at least one alkyl acrylate the homopolymers of which have a glass transition temperature of -40°C or below (constituent a), and from 7.5 to 95 wt % of at least one alkyl (meth)acrylate the homopolymers of which have a glass transition temperature of at least -25°C (such as constituents b, c and d described here after). They are more particularly useful in aqueous polymer dispersions comprising a polymer P that comprises
· from 5 to 92.5 wt.-% of at least one alkyl acrylate the homopolymers of which have a glass transition temperature of -40°C or below (constituent a);
· from 2.5 to 30 wt.-% of at least one alkyl (meth)acrylate the homopolymers of which have a glass transition temperature of from -25°C to 0°C (constituent b);
· from 2.5 to 30 wt.-% of at least one alkyl (meth)acrylate the homopolymers of which have a glass transition temperature of between 0°C and 20°C (constituent c);
· from 1 to 75 wt.-% of at least one ethylenically unsaturated monomer the homopolymers of which have a glass transition temperature of 20°C or above and which do not contain a functional group selected from hydroxyl, acid, acid anhydride, nitro, epoxy and amino groups (constituent d);
· from 0 to 10 wt.-% of at least one ethylenically unsaturated monomer having at least one acid group or acid anhydride group (constituent e); and
· from 0 to 60 wt.-% of at least one ethylenically unsaturated monomer having either no further functional group or in addition to the ethylenically unsaturated group at least one functional group other than an acid group or an acid anhydride group (constituent f).

In a preferred embodiment of the invention the aqueous polymer dispersion comprises polymer P which is composed of constituents a, b, c and d, optionally together with constituents e and/or f, wherein constituent a ≠ constituent b ≠ constituent c ≠ constituent d ≠ constituent e ≠ constituent f .
All values in wt.-% in relation to monomers are based on the total weight of the polymer P.

In this specification the term "(meth)acryl..." means "acryl..." as well as "methacryl...". Compounds which are usually not interpreted as polymerizable monomers, such as initiators or chain transfer agents, are not to be understood as constituents of polymers P according to the invention. Thus, a polymer that is composed of constituents a, b, c, d, e and f may also contain e.g. fragments of radical initiators or chain transfer agents covalently bonded to the polymer.

Examples of alkyl acrylates which are covered by the definition of constituent a are: C₁-C₂₀ alkyl acrylates the homopolymers of which have a glass transition temperature of -40°C or below (T_{g}≤-40°C), preferably C₁-C₁₀ alkyl acrylates the homopolymers of which have a glass transition temperature of -40°C or below, in particular n-butyl acrylate, 2-ethylbutyl acrylate, hexyl acrylate, 2-ethylhexyl acrylate, nonyl acrylate and n-octyl acrylate. N-butyl acrylate and 2-ethylhexyl acrylate are preferred, 2-ethylhexyl acrylate is particularly preferred. In case that the polymer P contains 2-ethylhexyl acrylate it is preferred that the polymer does not contain any n-butyl acrylate or that the polymer P only contains minor amounts of n-butyl acrylate, preferably less than 5 wt.-%, more preferably less than 2 wt.-%, in particular less than 1 wt.-%.

Preferably the polymer P comprises 40 to 90 wt.-%, more preferably 55 to 80 wt.-%, in particular 64 to 70 wt.-%, of constituent a.

Examples of alkyl (meth)acrylates which are covered by the definition of constituent b are: C₁-C₂₂ alkyl (meth)acrylates the homopolymers of which have a glass transition temperature of from -25°C to 0°C (-25°C≤T_{g}≤0°C), preferably C₁-C₁₂ alkyl (meth)acrylates the homopolymers of which have a glass transition temperature of from -25°C to 0°C. Alkyl acrylates are preferred over the corresponding alkyl methacrylates. Ethyl acrylate, sec-butyl acrylate, isobutyl acrylate and isopropyl acrylate are preferred, particularly ethyl acrylate.
Preferably, the homopolymers of the alkyl (meth)acrylates which are covered by the definition of constituent b have a glass transition temperature of between -25°C and-5°C (-25 °C<T_{g}<-5°C).

Preferably the polymer P comprises 5 to 30 wt.-%, more preferably 8 to 20 wt.-%, in particular 10 to 15 wt.-%, of constituent b.

Examples of alkyl (meth)acrylates which are covered by the definition of constituent c are: C₁-C₂₀ alkyl (meth)acrylates the homopolymers of which have a glass transition temperature of between 0°C and 20°C (0°C<T_{g}<20°C), preferably C₁-C₁₂ alkyl (meth)acrylates the homopolymers of which have a glass transition temperature of between 0°C and 20°C. Methyl acrylate and n-butyl methacrylate are preferred, particularly methyl acrylate.

Preferably the homopolymers of the alkyl (meth)acrylates which are covered by the definition of constituent c have a glass transition temperature of between 5°C and 20°C (5°C<T_{g}< 20°C).

Preferably the polymer P comprises 5 to 30 wt.-%, more preferably 8 to 20 wt.-%, in particular 10 to 15 wt.-%, of constituent c.

Preferably the total amount of constituent b and constituent c in polymer P is 5 to 30 wt.-%, more preferably 15 to 30 wt.-%, in particular 22 to 26 wt.-%. In a preferred embodiment the polymer comprises equal amounts of constituent b and constituent c.

Examples of preferred monomers, which are covered by the definition of constituent d, are:
- alkyl (meth)acrylates: preferably C₁-C₂₂ alkyl (meth)acrylates the homopolymers of which have a glass transition temperature of 20°C or above (T_{g}≥20°C), more preferably C₁-C₁₀ alkyl (meth)acrylates the homopolymers of which have a glass transition temperature of 20°C or above, in particular methyl methacrylate and tert-butyl acrylate. Methyl methacrylate is especially preferred.
- vinylaromatic compounds: preferably C₈-C₂₀ vinylaromatic compounds the homopolymers of which have a glass transition temperature of 20°C or above (T_{g}≥20°C), more preferably C₈-C₂₀ styrene derivatives the homopolymers of which have a glass transition temperature of 20°C or above, in particular methylstyrene, para-methylstyrene, 4-tert-butylstyrene, 4-sec-butylstyrene and styrene; styrene being particularly preferred.
- vinylhalides: preferably ethylenically unsaturated compounds substituted with chlorine, fluorine or bromine the homopolymers of which have a glass transition temperature of 20°C or above (T_{g}≥20°C), more preferably C₂-C₅ vinylhalides the homopolymers of which have a glass transition temperature of 20°C or above ; in particular vinyl chloride.
- vinylnitriles: preferably C₂-C₅ vinylnitriles the homopolymers of which have a glass transition temperature of 20°C or above (T_{g}≥20°C), in particular methacrylonitrile and acrylonitrile.
- vinylesters of carboxylic acids: preferably vinylesters of C₁-C₂₀ carboxylic acids the homopolymers of which have a glass transition temperature of 20°C or above (T_{g}≥20°C), more preferably vinyl acetate and vinyl formate.

Preferably the homopolymers of the alkyl (meth)acrylates which are covered by the definition of constituent d have a glass transition temperature of above 25°C (T_{g}>25°C).

Preferably the polymer P comprises of 1 to 30 wt.-%, more preferably 1.5 to 15 wt.-%, in particular 2 to 4 wt.-% of constituent d.

Examples of ethylenically unsaturated compounds which are covered by the definition of constituent e are: ethylenically unsaturated compounds having carboxyl groups, such as (meth)acrylic acid, maleic acid, ethylenically unsaturated acid anhydrides or monoesters of ethylenically unsaturated diacids or triacids, such as maleic acid anhydride, maleic acid monoester or fumaric acid monoester. Acrylic acid and methacrylic acid are preferred, particularly a mixture thereof.

Preferably the polymer P comprises 0.5 to 6 wt.-%, more preferably 0.5 to 5 wt.-%, in particular 3.5 to 5 wt.-% of constituent e.

Examples of further ethylenically unsaturated compounds, which are covered by the definition of constituent f are: compounds which customarily enhance the internal strength and/or adhesion of the films formed from an aqueous polymer dispersion containing the polymers of the invention. In addition to the ethylenically unsaturated group these compounds either contain no further functional group or these compounds contain one or more further functional group other than an acid group or an acid anhydride group. Compounds of this type (constituent f) preferably have epoxy, hydroxyl, ethyl imidazolidone, N-methylol, carbonyl or a further ethylenically unsaturated group which is not conjugated with the other ethylenically unsaturated group. The definition of constituent f encompasses ethylenically unsaturated compounds having an acid group or an acid anhydride group if additionally one or more further functional groups other than an acid group or an acid anhydride group are present in the molecules.

Compounds, which are covered by the definition of constituent f, are only those compounds, which are not covered by the definition of constituents a, b, c, d and e.

Ethylenically unsaturated compounds which are covered by the definition of constituent f may contain functional groups such as -OR, -OOR, -SR, -SSR, -COR,-COHal, -CO₂R, -OCO₂R, -OCONRR', -NRCO₂R', -CONRR', -NRCONR'R", -NRR',-NRNR'R", -NO₂, -NO, -SOR, -SO₂R, -CR=CR'R", -C≡CR, -Hal, -N₃, -N=NR, -C=NR, -CN, -NC, -NCO, -OCN, -NCS, -SCN, -Si(OR)₃, -CNRNR'R", -NRCNR'NR"R"', -PO(OR)₂,-OPO(OR)₂, -PO(OR)R, -POR₂, -SO₃R, -OSO₃R, -aryl, -heteroaryl.
Aryl means any aromatic hydrocarbon having 6 to 24 carbon ring atoms that may be monocyclic or annealed, e.g. phenyl, naphthyl, azulene, anthracene and phenanthrene.
Heteroaryl means any aromatic hydrocarbon having 5 to 24 ring atoms which may be monocyclic or annealed, of which at least one ring atom is a heteroatom selected from the group consisting of N, O, S, and P, e.g. pyrrole, indole, imidazole, benzimidazole, pyrazin, pyridazin, triazole, tetrazole, oxazole, isoxazole, thiophene, thiazole, isothiazole, pyridine, chinoline, isochinoline, pyrimidine, etc.
In the above exemplified functional groups R, R', R" and R"' may independently be hydrogen or C₁-C₂₄ alkyl (linear, branched or cyclic), Hal means F, Cl, Br or I. The functional groups also include cyclic analogues: for example, -OR includes oxiranes,-SR includes thiiranes, -CONRR' includes lactames and -CO₂R includes lactones. The functional groups may also be combined.

Preferably, ethylenically unsaturated compounds which are covered by the definition of constituent f contain in addition to the ethylenically unsaturated group either no further functional group or one or more of the above mentioned functional groups. Preferably, the compound contains an epoxy group, ethyl imidazolidone group, hydroxyl group, N-methylol group, carbonyl group or a further ethylenically unsaturated group that is not conjugated with the other ethylenically unsaturated group. Ethylenically unsaturated acids or acid anhydrides are also encompasses by the definition of constituent f if at least one further functional group is present. In a particularly preferred embodiment constituent f comprises ethyl imidazolidone methacrylate.

Preferably the polymer P comprises less than 25 wt.-%, more preferably less than 20 wt.-%, even more preferably 0.1 to 10 wt.-%, in particular 0.2% to 2.5 wt.-% of constituent f.

In one embodiment of the invention the polymer P comprises 60 to 80 wt.-% of constituent a, 10 to 20 wt.-% of constituent b, 10 to 20 wt.-% of constituent c and 1 to 5 wt.-% of constituent d.

In a preferred embodiment of the invention the polymer P comprises 60 to 70 wt.-% of constituent a, 10 to 15 wt.-% of constituent b, 10 to 15 wt.-% of constituent c, 2 to 4 wt.-% of constituent d, 3.5 to 5 wt.-% of constituent e and 0.2% to 2.5 wt.-% of constituent f.

In another embodiment more than 85 wt.-% of the polymer P is composed of 2-ethylhexyl acrylate, ethyl acrylate and methyl acrylate.

In a preferred embodiment the polymer P comprises 2-ethylhexyl acrylate, ethyl acrylate, methyl acrylate and styrene, and optionally (meth)acrylic acid and/or ethyl imidazolidone methacrylate. In another embodiment the polymer P additionally comprises n-butyl acrylate and/or methyl methacrylate.

In a preferred embodiment the polymer P is composed of 60 to 70 wt.-% of 2-ethylhexyl acrylate, 10 to 15 wt.-% of ethyl acrylate, 10 to 15 wt.-% of methyl acrylate, 1 to 5 wt.-% of styrene, 0.5 to 2 wt.-% of acrylic acid, 0.5 to 2 wt.-% of methacrylic acid, 0.1 to 5 wt.-% of ethyl imidazolidone methacrylate, 0 to 1 wt.-% of n-butyl acrylate and/or 0 to 2 wt.-% methyl methacrylate.

In a particularly preferred embodiment the polymer P is composed of 60 to 70 wt.-% of 2-ethylhexyl acrylate, 10 to 15 wt.-% of ethyl acrylate, 10 to 15 wt.-% of methyl acrylate, 1 to 5 wt.-% of styrene, 0.5 to 2 wt.-% of acrylic acid, 0.5 to 2 wt.-% of methacrylic acid and 1 to 5 wt.-% of ethyl imidazolidone methacrylate, 0.01 to 1 wt.-% of n-butyl acrylate and/or 0.1 to 2 wt.-% methyl methacrylate.

The glass transition temperature (Tg) of a homopolymer can be determined by conventional methods and if nothing else is mentioned in the present application all glass transition temperatures are measured by differential thermal analysis (DTA) or differential scanning calorimetry (DSC) (see ASTM 3418/82, midpoint temperature). For the homopolymers of numerous monomers the glass transition temperatures Tg are known in the prior art. It is referred to "Polymer Handbook, 2d Ed. By J. Brandrup & E.H. Immergut, 1975, J. Wiley & Sons". If a certain monomer is not already explicitly classified as one of the constituents in this specification the Tg values disclosed in the above referenced handbook should serve as the decisive basis whether a certain monomer falls under the definition of any of the constituents. Only if a Tg value of a distinct homopolymer is disclosed neither in this specification nor in the above referenced handbook, the Tg value obtained according to DMTA or DSC measurements becomes decisive.

The aqueous polymer dispersion according to the invention preferably contains from 1 to 5 wt.-% , more preferably from 1.5 to 3.5 wt-%, of an emulsifier mixture according to the invention (based on the weight of polymer P).

The aqueous polymer dispersion may be prepared by adding the emulsifier mixture according to the invention or part thereof to an aqueous polymer dispersion prepared by any method suitable therefore, optionally prepared in the presence of the emulsifier mixture according to the invention or part thereof.

The emulsifier mixtures according to the invention are particularly useful in emulsion polymerisation. The present invention therefore also relates to the use of an emulsifier mixture according to the invention in emulsion polymerisation and more specifically to a preparation process of aqueous polymer dispersions by emulsion polymerisation in the presence of an emulsifier mixture according to the invention.

The aqueous polymer dispersions according to the invention are preferably prepared by emulsion polymerisation in the presence of an emulsifier mixture according to the invention.

The emulsion polymerisation is preferably carried out at a temperature of from 30 to 100°C, more preferably of from 50 to 95°C. The polymerisation medium may be composed exclusively of water, but also mixtures of solvents which are at least partially soluble in water may be used, e.g. a mixture of methanol and water or a mixture of isopropanol and water. The emulsion polymerisation may be carried out in a batch process or alternatively in a semi-continuous process, wherein the reactants and auxiliary additives are added continuously to a reactor in which the polymerisation takes place. The reactants may also be added as a gradient or stepwise.

In a preferred embodiment of the preparation process according to the invention the polymerisation is carried out in a semi-continuous process, wherein initially a relatively small portion of the monomers to be polymerised is fed into the reactor, heated and prepolymerized. Then, the remainder of the monomers is continuously fed into the reactor, usually via several inlets that are spatially separated from one another. The monomers may be fed into the reactor in pure or in emulsified form (pre-emulsions), as single monomers per inlet or as mixtures of monomers. The mass flow through each inlet may be adjusted individually, i.e. stepwise or as a gradient. The monomers may also be fed into the reactor, thereby establishing a superimposed concentration gradient within the reaction zone of the reactor.

Preferably the polymer is prepared by emulsion polymerisation in water in the presence of the emulsifier mixture according to the invention. Preferably the quantity of emulsifier mixture used is such that the final aqueous polymer dispersion obtained from the polymerisation process contains from 1 to 5 wt.-%, more preferably from 1.5 to 3.5 wt-%, of emulsifier mixture according to the invention (based on the total weight of the monomers to be polymerised).

In addition to the emulsifier mixture according to the invention, protective colloids customarily used for carrying out free radical aqueous emulsion polymerisations may be used. Examples of suitable protective colloids are polyvinyl alcohols, cellulose derivatives and vinylpyrrolidone-containing polymers. A detailed description of further suitable protective colloids may be found in Houben-Weyl, Methoden der organischen Chemie, Volume XIV/ 1, Makromolekulare Stoffe, Georg Thieme Verlag, Stuttgart, 1961, pages 411 to 420. Preferably, no protective colloids having a molecular weight above 1000 are used.

Chain transfer reagents can also be used in the course of the polymerisation, for example in amounts of from 0.01 to 0.8 parts per 100 parts per weight of the monomers to be polymerised. The function of the chain transfer reagents is to reduce the molar mass of the polymers obtained. Suitable examples are compounds having a thiol group, such as tert-butyl mercaptane, ethylhexyl thioglycolate, mercaptoethanol, mercaptopropyl-trimethoxysilane, n-dodecyl mercaptane or tert-dodecyl mercaptane.

Suitable free radical polymerisation initiators are all those which are capable of initiating a free radical aqueous emulsion polymerisation. Preference is given to peroxides, with particular preference to alkali metal peroxydisulfates, in particular to ammonium peroxydisulfate. Other suitable initiators are for example redox-initiator systems, such as ascorbic acid/Fe(II)sulfate/sodium peroxydisulfate, tert-butylhydroperoxide/sodium disulfite or tert-butylhydroperoxide/sodium hydroxymethanesulfinic acid. The amount of initiator may generally range from 0.1 to 10 wt.-%, preferably from 0.2 to 5 wt.-% (based on the total weight of the monomers to be polymerised). It is also possible to use a mixture of different initiators.

The suitable mode of supplying the reaction medium with initiator is known to the skilled person. Before the polymerisation starts the initiator may be present in the reactor either in the total amount or only in part. In the latter case, the remainder of the initiator is fed into the reactor via an inlet at a rate dependent on the consumption of the initiator due to the polymerisation reaction. In order to avoid that any monomers are still present in the reaction medium after the polymerisation has come to an end, generally further initiator is added when the yield of the reaction is in the range of 95% or above.

Preferably the polymerisation starts with a polymerised seed or with a prepolymer. Not all of the constituents have to be present simultaneously in the polymerised seed or in the prepolymer. Preferably the composition of the constituents of the polymerised seed and the composition of the constituents which are polymerised on the polymerised seed differ in at least one constituent. Preferably the polymerised seed comprises n-butyl acrylate which is not present among the constituents to be polymerised on the polymerised seed. Preferably the aqueous dispersion contains as a polymerised seed or a prepolymer a polymer having a non-zero weight average diameter of from 10 to 100 nm, preferably of from 40 to 60 nm.

In one embodiment of the invention the polymer is prepared using a first, a second and a third pre-mix tank and a reactor. In a first step of the process the first and the second pre-mix tank are fed with water and emulsifier, optionally with further additives such as sodium carbonate and isopropanol. The mixture is aged for a certain time, preferably for 15 minutes. Then, the monomers that are to be polymerised are added to the solutions contained in the first and the second pre-mix tank. It is possible that both pre-mix tanks are fed with the same monomers in identical amounts. Alternatively, it is also possible to add different amounts of different monomers to the pre-mix tanks. A chain transfer agent such as n-dodecyl mercaptan is preferably added to the pre-emulsion of the first or the second pre-mix tank. It is also possible, that the same chain transfer agent or a different chain transfer agent is added to the pre-emulsion in the other pre-mix tank. The third pre-mix tank is fed with water and initiator and the reactor is fed with water, then is heated to the desired reaction temperature and fed with initiator and seed. The polymerisation is then performed by continuously supplying the reactor with the pre-emulsions from the first and the second pre-mix tank and with the solution of the initiator from the third pre-mix tank. Both pre-emulsions can be fed simultaneously directly in the reactor or one after each other, or the second pre-emulsion fed to the first pre-emulsion and simultaneously the content of the first pre-emulsion tank is fed to the reactor. Preferably the pre-emulsions are added during a period of some hours, preferably during 2 to 8 hours. When the total initial content of the three pre-mix tanks has been transferred into the reactor the mixture is aged and cooled. Additional amount of initiator can be added to reduce the level of free monomers. Further additives such as biocides can then be added.

In another embodiment of the invention the preparation of the polymers starts from a single mixture containing all monomers to be incorporated into the polymer chain. A fraction of this mixture is fed into the reactor and the polymerisation is initiated. If desired, polymerised seed material may be present as well. After initiation of the polymerisation the remainder of the monomer mixture is added to the reaction solution stepwise or as a gradient. Simultaneously, a variable amount of the chain transfer agent is added to the reactor, optionally as a gradient. Alternatively, the total amount of the mixture containing all monomers is fed to the reactor before the polymerisation is initiated. Then, the chain transfer agent is added to the reactor in various amounts during the polymerisation, preferably as a gradient. The continuous addition of chain transfer agent during the polymerisation allows to control the distribution of the molecular mass of the polymers.

By varying the concentration of the chain transfer agent in the feeds to the reactor, it is possible to broaden the distribution of molecular masses and to control the particle morphology. This principle is known in the prior art, e.g. it can be referred to US 4,039,500.

The emulsion polymerisation usually yields aqueous polymer dispersions having a solids content of from 15 to 75 wt.-%, preferably of from 40 to 75 wt.-%. Polymer dispersions having a high solids content are preferred.

Preferably, the polymer particles obtained according to the invention have an average particle size of 150 to 300 nm, more preferably of 200 to 250 nm.

The pH of the aqueous dispersions is preferably in the range of 4 to 9.

Preferably the aqueous polymer dispersions according to the invention are the product dispersions which are obtained from the emulsion polymerisation in the presence of an emulsifier mixture according to the invention.
The polymers P, particularly the aqueous polymer dispersions thereof may be used as adhesives, preferably as pressure sensitive adhesives. Preferably the polymers P are used in form of their aqueous dispersions, which may be used without addition of any further additives. However, it is also possible that further additives, such as tackifiers, defoaming agents, wetting agents, thickening agents, coagulants, softeners, pigments, surfactants, biocides or fillers are added. Examples of suitable tackifiers are resins such as kolophonium resins (e.g. abietic acid and pimaric acid) and their derivatives, such as esters thereof. Kolophonium esters may be obtained from alcohols such as methanol, ethanediol, diethylenglycol, triethyleneglycol, 1,2,3-propanetriol, pentaerythritol, etc. Other suitable tackifiers are cumaron-inden resins, polyterpene resins, hydrocarbon resins based on unsaturated hydrocarbons, such as butadiene, pentene, methylbutene, isoprene, piperylene, divinylmethane, pentadiene, cyclopentene, cyclopentadiene, cyclohexadiene, styrene and styrene derivatives. Further suitable tackifiers are polyacrylates having a relatively low molecular weight (mean average weight generally below 30000). These polyacrylates generally are composed of C₁-C₈ alkyl(meth)acrylates.

The aqueous polymer dispersions according to the invention present a good adhesion and good cohesion, and are therefore suitable for the preparation of pressure sensitive adhesives for tapes. They also have a good resistance to water whitening and so-called blush and are therefore suitable for the manufacture of pressure sensitive adhesives that may be used with transparent facestock or substrate. The aqueous polymer dispersions present rheological properties which are well adapted to the coating systems used to produce industrially tape and label castings; they have a rheology with limited shear-thinning. Hence, they permit to obtain a good surface levelling of the applied wet film towards a uniform flat dry film. The aqueous polymer dispersions according to the invention are free of coagulum which ensures easy handling of the product, especially at industrial scale and permits to obtain defect-free films. Hence, the aqueous polymer dispersions according to the invention permits to form a film of pressure sensitive adhesive that is almost defect-free, comprising almost no craters or holes nor lines upon drying.

The present invention therefore also relates to a pressure sensitive adhesive obtained from aqueous dispersions according to the invention.

The invention is further illustrated by the following examples:

### Example 1 :

An aqueous polymer dispersion was prepared by polymerisation in a reactor at a polymerisation temperature of 80°C such as described here below. During the course of the polymerisation two pre-emulsions (pre-emulsion 1 and pre-emulsion 2) were fed into the reactor. Pre-emulsion 2 was introduced in pre-emulsion 1 (in pre-mix tank 1) while pre-mix tank 1 content was fed into the reactor. In parallel, the initiator solution (in pre-mix tank 3) was fed into the reactor containing the polymerised seed the preparation of which is described hereafter. The initial composition of the pre-emulsions and the initial reactor content are shown in the Table 1. At the end of the polymerisation, the reactor is realimented with initiator and a biocide is added as shown in Table 1.

**Table 1:**

| Steps | Raw Materials | Dilutio n | Weight [g] | |
|---|---|---|---|---|
| | | | Bottom tank | Pre-emulsion |
| Reactor | H₂O | | 482.95 | |
| | *Polymerised seed* | 33% | 25.45 | |
| Initiator | (NH₄)₂S₂O₈ | | 1.20 | |
| | H₂O | | 14.40 | |
| Pre-mix tank 3 | (NH₄)₂S₂O₈ | | 2.40 | |
| | H₂O | | 25.60 | |
| Pre-emulsion 1 In pre-mix tank 1 | H₂O | | | 195.07 |
| | Na₂CO₃ 2H₂O | | | 1.20 |
| | Rhodapex L 12 | 30% | | 20.00 |
| | UFAPOL DMA PS2 | 40% | | 15.00 |
| | Isopropanol | | | 4.50 |
| | n-dodecyl mercaptan | | | 1.20 |
| | 2-ethylhexyl acrylate | | | 399.17 |
| | Styrene | | | 11.92 |
| | Ethyl acrylate | | | 74.48 |
| | Methyl acrylate | | | 74.48 |
| | Methacrylic acid | | | 17.87 |
| | Acrylic acid | | | 5.96 |
| | Ethyl imidazolidone methacrylate | | | 11.92 |
| Pre-emulsion 2 In pre-mix tank 2 | H₂O | | | 195.07 |
| | Na₂CO₃ 2H₂O | | | 1.20 |
| | Rhodapex L 12 | 30% | | 20.00 |
| | UFAPOL DMA PS2 | 40% | | 15.00 |
| | Isopropanol | | | 4.50 |
| | 2-ethylhexyl acrylate | | | 399.17 |
| | Styrene | | | 11.92 |
| | Ethyl acrylate | | | 74.48 |
| | Methyl acrylate | | | 74.48 |
| | Methacrylic acid | | | 17.87 |
| | Acrylic acid | | | 5.96 |
| | Ethyl imidazolidone methacrylate | | | 11.92 |
| Realimentation | Fe(NO₃)₃ | 10% | 0.05 | |
| | Luperox H70 | 10% | 6.00 | |
| | Rongalit C | 5% | 12.00 | |
| Formulation | Biocide K10 | 1% | 4.50 | |
| Luperox H70 is tert.-butylhydroperoxyde 70% with 30% water; | | | | |
| Rongalit C is sodium hydroxymethanesulphinate | | | | |
| Biocide K10 is a biocide from Thor ; it is an aqueous mixture of 5-chloro-2-methyl-4-isothiazolin-3-one and 2-methyl-4-isothiazoline-3-one. | | | | |

The polymerised seed used was prepared such as described in Table 2. The reactor was fed with water and emlsifier, then heated to 80°C. Then, initiator was introduced and polymerisation started by feeding monomer pre-emulsion in 3-4 hours. The mixture was aged for 1 hour then cooled.

**Table 2:**

| polymerised seed | | quant. [g] | quant. [%] |
|---|---|---|---|
| reactor | demineralized water | 1615.00 | 47.432 |
| | *Rhodacal DSB* | *42.03* | *2.988* |
| | *Rhodacal* DS4 | 27.41 | |
| initiation | (NH₄)₂S₂O₈ | 2.00 | 0.072 |
| pre-emulsion | demineralized water | 403.00 | 12.391 |
| | *Rhodacal DSB* | 8.41 | |
| | *Rhodacal* DS4 | 5.49 | |
| monomers | 2-ethylhexyl acrylate | 415.00 | 6.633 |
| | n-butyl acrylate | 415.00 | 14.341 |
| | Styrene | 155.00 | 14.341 |
| | acrylic acid | 15.00 | 0.538 |
| | | | |
| Total | | 2789.24 | 100.000 |
| % dry material | | | 33.00 |

### Examples 2 to 14 :

Polymers 2 to 14 have been prepared following the same process and using the same monomer relative amount as in Example 1 (except that polymer 9 has been performed with lower styrene amount (styrene = 5.96 g in each pre-emulsion)), but with an emulsifier mixture such as disclosed in Table 3. The water amount in pre-emulsions was also adapted according dilution of surfactant solution in order to get a final polymer dispersion with a solids (non-volatile, see method later) content of about 55 wt %.
In examples 3R, 7R, 8R, 10R, 13R and 14R, emulsifier mixtures not within the scope of the invention have been used.
The nature of the emulsifiers disclosed in table 3 as stated in the MSDS and TDS provided by the emulsifier suppliers was :
DISPONIL®FES 32 IS (COGNIS) : an aqueous solution of fatty alcohol ether sulfate, sodium salt (EO degree: 4, alkyl radical: C12-C18).
DISPONIL®FES 993 IS (COGNIS) : an aqueous solution of fatty alcohol ether sulfate, sodium salt (EO degree: 12, alkyl radical: C12-C18).
DISPONIL®FES 77 IS (COGNIS) : an aqueous solution of fatty alcohol ether sulfate, sodium salt (EO degree: 30, alkyl radical: C12-C18).
DISPONIL®FES 61 IS (COGNIS) : an aqueous solution of fatty alcohol ether sulfate, sodium salt (EO degree: 50, alkyl radical: C12-C18).
RHODAPEX®L 12 (RHODIA) : an aqueous solution of fatty alcohol ether sulfate, sodium salt (EO degree: 12, alkyl radical: C12-C18).
RHODAPEX®AB 20 (RHODIA) : an aqueous solution of fatty alcohol ether sulfate, ammonium salt (EO degree: 9, alkyl radical: C12-C18).
DOWFAX®2A1 (DOW) : an aqueous solution of mono- and di-alkyl disulphonated diphenyloxide, disodium salt
RHODACAL®DSB (RHODIA) : is an aqueous solution of mono- and di-alkyl disulphonated diphenyloxide, disodium salt
UFAPOL®APS 2 (COGNIS) : an aqueous solution of mono- and di-alkyl disulphonated diphenyloxide, disodium salt
UFAPOL®DMA PS2 (COGNIS) : an aqueous solution of an optimized combination of mono- and di-alkyl disulphonated diphenyloxide, disodium salt
RHODACAL®DS4 (RHODIA) : a sodium dodecylbenzene sulfonate (branched)

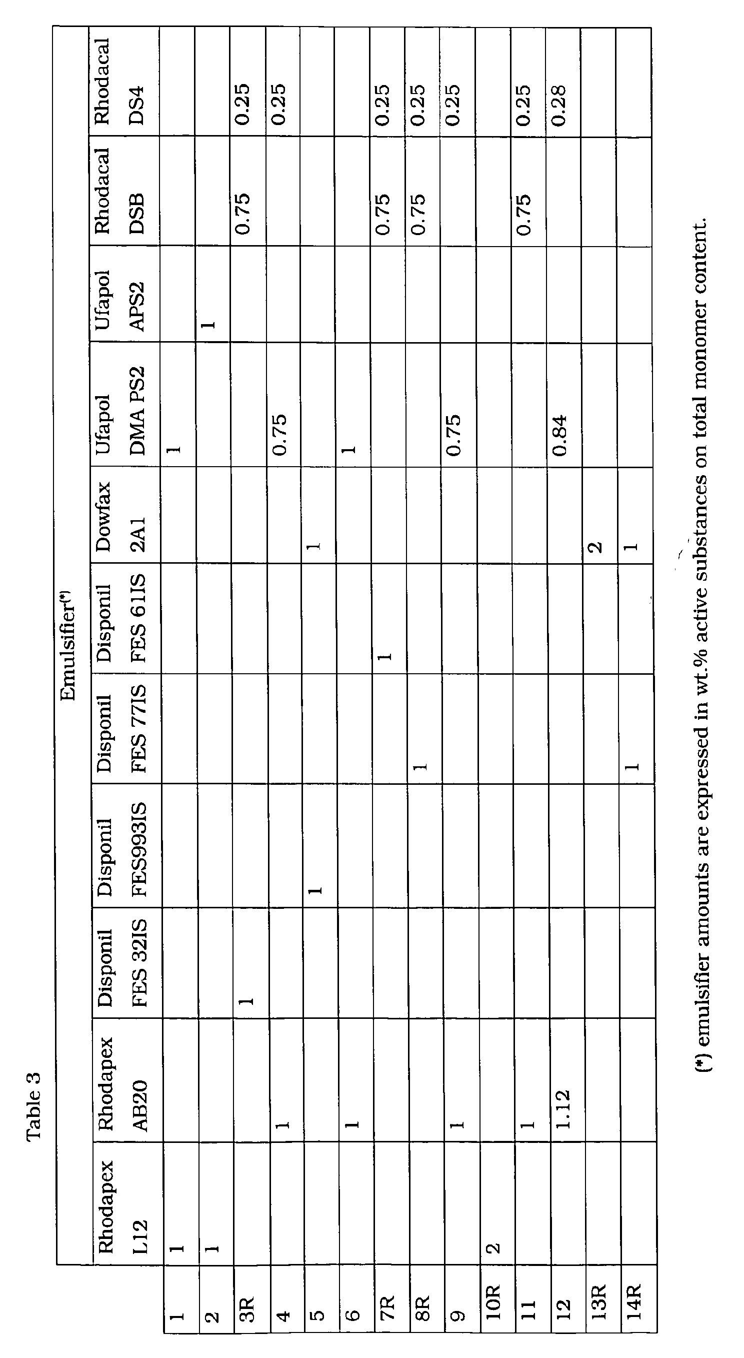

The aqueous polymer dispersions obtained from examples 1 to 14 were characterised by measuring the following features:
· pH
· Solids content. This method covers the quantitative determination of the residue resulting from the evaporation of all solvents or constituents that are volatile. About 2 g of dispersion is dried in an aluminium cup for 2 hours at 120°C. The sample is then cooled to room temperature in a dessicator. %solid content = (weight before heating/ weight after heating)* 100.
· Brookfield viscosity. This method covers the measurement of the viscosity of liquids by determining the torque on a spindle rotating at determined and constant speed in the liquid sample whose temperature is adjusted to 25 +/- 0.1°C. Viscosity was measured at 2 rotating speed: 50 & 0.5 rpm. The values reported hereafter are the viscosity (η)at 50 rpm (η₅₀) and the viscosity ratio = η_{0.5}/η₅₀.
· Particle size. Weight-averaged values determined by dynamic light scattering (Nicomp 370, Particle Sizing Systems).
· Coagulum. This covers the evaluation of presence of grits collected as the polymer dispersion is filtered (mesh size = 150 µm), as well as the occurrence of coagulum on the walls of the reactor and/or the agitator.

Adhesive films were prepared according to state-of-the-art methods and evaluated:
· Coatability : This method covers the ability of the aqueous polymer dispersion (latex) to wet a substrate and form a defect-free film. This property has been evaluated at lab and pilot-scale.
· Lab scale coating : Non-formulated latex is coated on a 23 µm-thick PET film to form a 10µm-thick dry film. The appearance of craters\holes in the film upon drying is evaluated from 0 to 6. 0 = no crater\holes, uniform films; 6 = many large craters\holes, discontinuous film.
· Pilot scale coating : Formulated latex (i.e. + wetting agent & antifoam) is coated with a pilot coating machine Kroenert RECO 303 on a Si-coated release liner with a reverse gravure coating head at 120 m/min (coating width = 420 mm), dried and laminated with PVC films (90 µm thick), after drying. The dry adhesive film thickness is 20µm +/- 2. The presence of 2 kind of defects is investigated: lines (stamp of the gravure roll structure) and crater\holes. Each was evaluated from 0 to 3 : 0 = no defect; 1 = few defects appearing in certain part of the coated film; 2 = some defects regularly distributed over the film; 3 = many defects covering the whole coated film.

In addition, adhesive properties of the aqueous polymer dispersions, which presented defect-free films, were tested according to standard test methods:
Test methods : Peel adhesion (peel strength), resistance to shear from a standard surface (shear strength) and "Quick-Stick" tack (loop tack strength) were determined according to FINAT test methods (FTM) Nos. 1, 8 and 9. These standard test methods FTM 1, FTM 8 and FTM 9 are described in FINAT Technical Handbook 5th edition, 1999, (published by FINAT, P.O. Box 85612 NL-2508 CH The Hague, The Netherlands).
a) Preparing the test strips : The aqueous dispersion was mixed with a wetting agent (Servoxyl VLA 70: sulfosuccinate-type surfactant (35wt% in water)). The mixture proportion was 1.5 g Servoxyl in 100 g latex. Then, it was applied to siliconized paper in a thin film, using a bar coater, and was dried at 110°C for 3 minutes. The gap height of the coating bar was chosen so that the weight per unit area of the dried adhesives was 20-22 g/m2. A commercially customary plasticized PVC film (80 µm thick) was placed on the dried adhesive and rolled on firmly using a manual roll. The resulting adhesive was stored under atmospheric conditions for at least 24h, then it was cut into 25 mm wide strips. Their minimum length was 175 mm.
b) Testing the shear strength as a measure of the cohesion (according to FINAT FTM 8) : After the siliconized paper had been peeled off, the film test strip was bonded to the edge of a stainless steel sheet so as to give a bond area of 25 mm X 25 mm. 10 minutes after bonding, a 1000 g weight was fastened to the protruding end of the film strip, and the metal sheet was suspended vertically (ambient conditions: 23°C, 50% relative humidity). The shear strength was taken as the time in minutes, until the adhesive bond failed under the influence of the weight, as the mean from the results of three test specimens.
c) Testing the peel strength as a measure of the adhesion (according to FINAT FTM 1) : After the siliconized paper had been peeled off, the film test strip was bonded to a glass plate (ambient conditions: 23°C, 50% relative humidity). The test strip was left for 20 min, then the strip was peeled off at an angle of 180° and at a rate of 300 mm/min with the aid of a tensile testing apparatus. The peel strength was taken as the force, in N/25 mm, required to do this, again as a mean from the results of three test specimens. The procedure was repeated with a second set of strips with a period of 24h before testing.
d) Testing the loop tack strength as a measure of the tackiness (according to FINAT FTM 9) : After the siliconized paper had been peeled off, the two ends of the adhesive coated facing material strip were held together and a loop was formed from the strip, adhesive surface outermost, by bringing the two ends together. The loop ends were clamped for a distance of 10 mm into the top jaw of the tensile tester leaving the loop hanging vertically downwards. The loop was brought into contact with a glass plate at a speed of 300 mm/minute. When full contact over the glass plate had been achieved (25 mm X 25 mm), the direction of the machine was reversed and separation allowed to take place at a speed of 300 mm/minute (ambient conditions: 23°C, 50% relative humidity). The loop tack strength was taken as the force, in N/25 mm, required to do this, again as a mean from the results of three test specimens.

Testing the loss of transparency as a measure of the water-whitening resistance : This method covers the measurement of the loss of transparency of an adhesive coated PVC film after immersion for 7 and 60 minutes in a deionized water bath at 20° to 23°C (Reference: ASTM Method D 1746-70).
a) Preparation of the Formulation : To 200 g of aqueous dispersion were added under slow agitation 3 g of Servoxyl VLA 2170 35% . Under slow agitation NH4OH 25 % was added to adjust the pH to 6-6.5. The agitation was continued for further 30 minutes and the formulation was allowed to stand overnight.
b) Preparation of the coated material : An adhesive film of 20±2 g/m2 on silicone paper with an appropriate Meyer bar coater was drawn. The film was dried for 3 minutes at 110°C in the drying oven without a glass plate. The film was covered with PVC films. Thereafter, it was rolled over the assembly with the Finat roller of 2 kg.
c) Samples measurements : After calibration of the HAZE-GUARD PLUS (from Byk-Gardner), the loss in total transmittance light through the,coated material was measured under the following conditions :After the siliconized paper had been peeled off, a 25x25 mm sample cut from coated material was immersed in a deionized water bath at 23°C for 7 minutes. Then the total transmittance of light trough the strip was measured using a haze-guard plus (from BYK Gardner) (A) and compared to the total transmittance of the strip before immersion (B). The water-whitening was taken, in %, as the transmittance difference (A) - (B), again as a mean from the results of three test specimens. The procedure was repeated with a second set of strips with a period of 60 minutes in immersion before testing.

The results obtained are presented in Table 4.

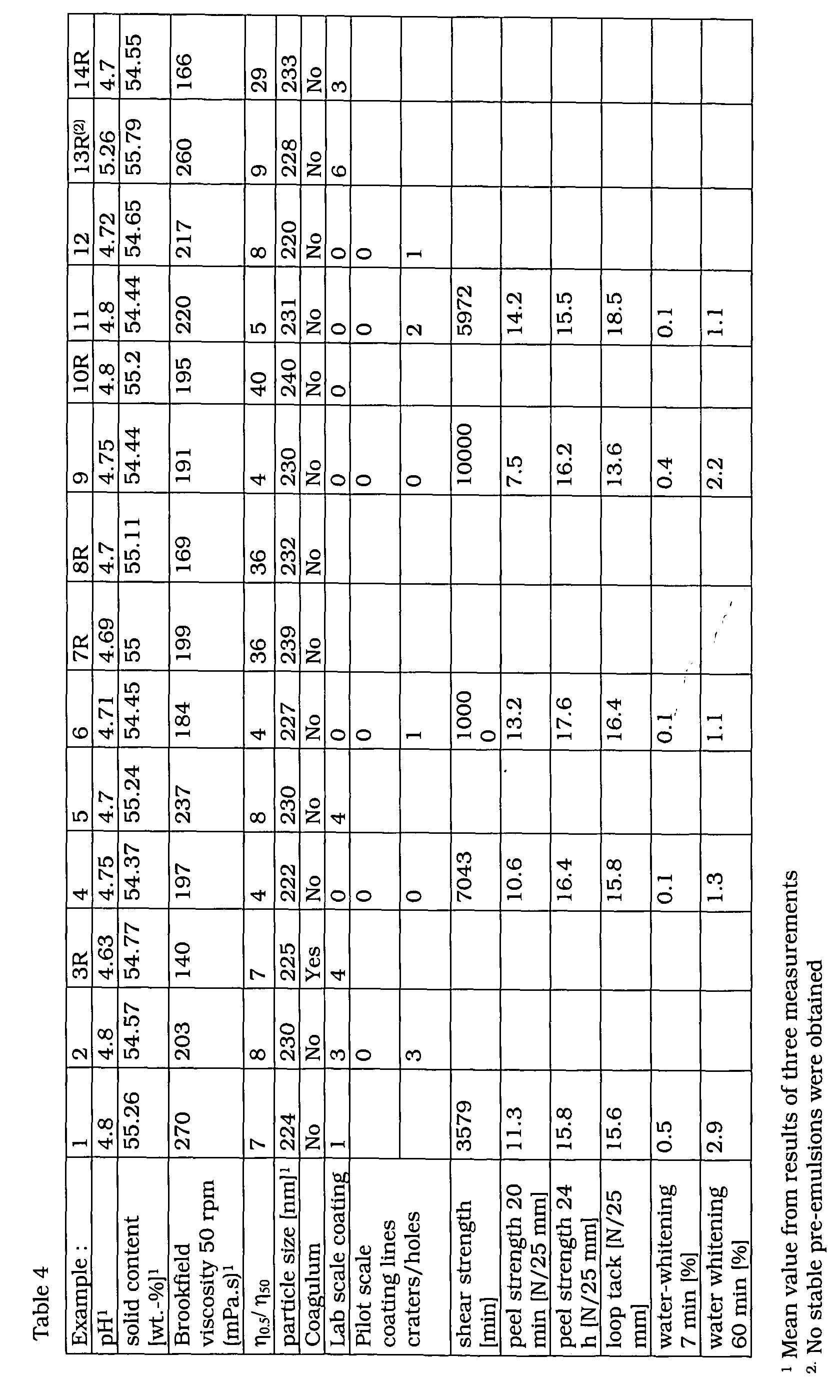

As illustrated by the above examples, the aqueous polymer dispersions according to the invention exhibit good coatability, which makes them usable for application with a clear film facestock, low water whitening characteristics and have an high shear strength together with excellent peel strength and loop tack. The aqueous dispersions obtained in examples 7R, 8R, 10R and 14R had a viscosity ratio η_{0.5}/η₅₀ which was too high to ensure good surface levelling of the freshly applied film. It was observed that coating with reverse gravure systems aqueous dispersions presenting such a high viscosity ratio results in dry films presenting lines. It was also shown that aqueous polymer dispersions having such a rheogical behavior are not adapted to the modem coating systems used for applying PSA films on flexible web.

The aqueous dispersion obtained in example 3R contained a lot of coagulum ; therefore it was not suitable for making PSA films nor could it be extrapolated at industrial scale.

## Claims

1. An emulsifier mixture comprising
(a) from 10 to 90 % by weight of the total weight of emulsifiers present in the mixture, of at least one emulsifier of formula (I) 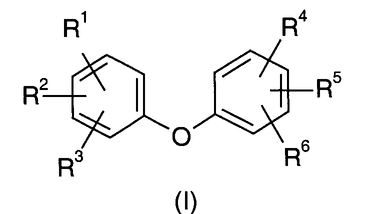 wherein one or two of R¹ to R⁶ groups are SO₃M, one or two of R¹ to R⁶
groups are a C1-18 alkyl group, and the remainder of R¹ to R⁶ groups are hydrogen and M represents a cation; and
(b) from 10 to 90 % by weight of the total weight of emulsifiers present in the mixture, of at least one emulsifier chosen from linear or branched alkylethersulfates responding to formula (II) and (III) 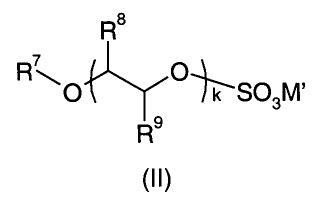 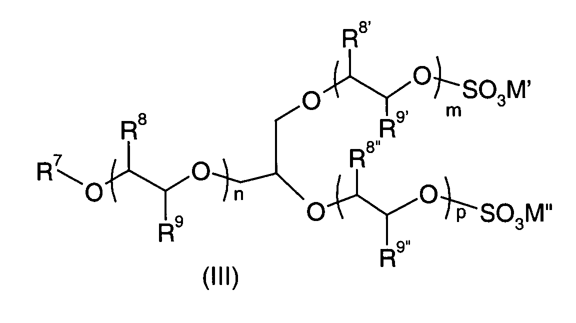
wherein R⁷ represents a C1-18 alkyl group, each of R⁸, R⁸', R^{8"}, R⁹, R^{9'} and R^{9"}, independently, represents hydrogen or a C1-6 alkyl group, M' and M", independently represent a cation, k is an integer from 6 to 20, and n, m and p, each independently, is an integer from 1 to 18 with the proviso that (n + m + p) is an integer from 6 to 20.

2. The mixture as claimed in claim 1, wherein in the emulsifier of formula (II) and (III) k, respectively (n + m + p), is an integer from 7 to 10.

3. The mixture as claimed in claim 1 or 2, comprising from 5 to 60 % by weight of the total weight of emulsifiers present in the mixture, of at least one emulsifier of formula (IV) 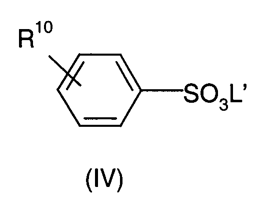 wherein R¹⁰ represents a C1-18 alkyl group and L' represents a cation.

4. The mixture as claimed in claim 3, comprising, per weight of emulsifiers present in the mixture, from 15 to 60 % by weight of at least one emulsifier of formula (I), from 30 to 60 % by weight of at least one emulsifier of formula (II) or (III) and from 10 to 45 % by weight of at least one emulsifier of formula (IV).

5. The use of an emulsifier mixture as claimed in any preceding claims in emulsion polymerisation.

6. An aqueous polymer dispersion comprising an emulsifier mixture as claimed in any of claims 1 to 4.

7. The aqueous polymer dispersion according to claim 6, comprising a polymer P comprising from 5 to 92.5 wt.-% of at least one alkyl acrylate the homopolymers of which have a glass transition temperature of -40°C or below (constituent a), and from 7.5 to 95 wt % of at least one alkyl (meth)acrylate the homopolymers of which have a glass transition temperature of at least -25°C.

8. The aqueous polymer dispersion according to claim 7, wherein polymer P comprises
· from 5 to 92.5 wt.-% of at least one alkyl acrylate the homopolymers of which have a glass transition temperature of -40°C or below (constituent a);
· from 2.5 to 30 wt.-% of at least one alkyl (meth)acrylate the homopolymers of which have a glass transition temperature of from -25°C to 0°C (constituent b);
· from 2.5 to 30 wt.-% of at least one alkyl (meth)acrylate the homopolymers of which have a glass transition temperature of between 0°C and 20°C (constituent c);
· from 1 to 75 wt.-% of at least one ethylenically unsaturated monomer the homopolymers of which have a glass transition temperature of 20°C or above and which do not contain a functional group selected from hydroxyl, acid, acid anhydride, nitro, epoxy and amino groups (constituent d);
· from 0 to 10 wt.-% of at least one ethylenically unsaturated monomer having at least one acid group or acid anhydride group (constituent e); and
· from 0 to 60 wt.-% of at least one ethylenically unsaturated monomer having either no further functional group or in addition to the ethylenically unsaturated group at least one functional group other than an acid group or an acid anhydride group (constituent f).

9. The aqueous polymer dispersion according to claim 8, wherein constituent (d) is a monomer selected from the group consisting of: (i) alkyl (meth)acrylates, (ii) vinylaromatic compounds, (iii) vinylhalides, (iv) vinylnitriles and (v) vinylesters of carboxylic acids.

10. The aqueous polymer dispersion according to claim 9, wherein constituent a is selected from the group consisting of n-butyl acrylate, 2-ethylbutyl acrylate, hexyl acrylate, 2-ethylhexyl acrylate, nonyl acrylate and octyl acrylate; constituent b is selected from the group consisting of ethyl acrylate, sec-butyl acrylate, dodecyl acrylate, isobutyl acrylate and isopropyl acrylate; constituent c is selected from the group consisting of methyl acrylate and n-butyl methacrylate; constituent d is selected from the group consisting of methyl methacrylate, tert-butyl acrylate, methylstyrene, para-methylstyrene, tert-butylstyrene, styrene, vinyl chloride, methacrylonitrile, vinyl acetate and vinyl formate; constituent e is selected from the group consisting of (meth)acrylic acid, maleic acid, maleic acid anhydride, maleic acid monoester and fumaric acid monoester; and constituent f comprises at least one ethylenically unsaturated compound having a group selected from the groups consisting of epoxy groups, hydroxyl groups, ethyl imidazolidone groups, N-methylol groups, carbonyl groups or further ethylenically unsaturated groups which are not conjugated with the other ethylenically unsaturated group.

11. The aqueous polymer dispersion according to any of claims 6 to 10, wherein polymer P is composed of 60 to 70 wt.-% of 2-ethylhexyl acrylate, 0 to 1 wt.-% of n-butyl acrylate, 10 to 15 wt.-% of ethyl acrylate, 10 to 15 wt.-% of methyl acrylate, 1 to 5 wt.-% of styrene, 0.5 to 2 wt.-% of acrylic acid, 0.5 to 2 wt.-% of methacrylic acid, 0.1 to 5 wt.-% of ethyl imidazolidone methacrylate and/or 0 to 2 wt.-% methyl methacrylate.

12. The aqueous polymer dispersion according to any of claims 6 to 11, wherein the amount of emulsifier mixture is from 1 to 5 % by weight relative to the weight of polymer P.

13. The aqueous polymer dispersion according to any of claims 6 to 12, wherein the aqueous polymer dispersion is prepared by emulsion polymerisation in the presence of a emulsifier mixture according to any of claims 1 to 4.

14. Use of an aqueous polymer dispersion according to any of claims 6 to 13 for the preparation of an adhesive.
